# EUROPÄISCHE PATENTSCHRIFT

(11) **EP 4 129 737 B1**
(45) Veröffentlichungstag und Bekanntmachung des Hinweises auf die Patenterteilung: **11.09.2024**
(21) Anmeldenummer: 22186659.3
(22) Anmeldetag: 25.07.2022
(51) Int. Cl.: B60K 28/14

(54) **VERFAHREN UND GEFAHRENFALLEINRICHTUNG ZUM DURCHFÜHREN EINER FAHRZEUGFUNKTION EINES FAHRZEUGS ZUR VERMINDERUNG EINES GEFAHRENRISIKOS DES FAHRZEUGS**
METHOD AND DEVICE FOR PERFORMING A VEHICLE FUNCTION OF A VEHICLE IN ORDER TO REDUCE A RISK TO THE VEHICLE
PROCÉDÉ ET DISPOSITIF EN CAS DE DANGER PERMETTANT DE METTRE EN UVRE UNE FONCTION DE VÉHICULE D'UN VÉHICULE POUR RÉDUIRE UN RISQUE DE DANGER D'UN VÉHICULE

(30) Priorität: 02.08.2021 DE 102021208369
(43) Veröffentlichungstag der Anmeldung: 08.02.2023
(73) Patentinhaber: VOLKSWAGEN AG, 38440 Wolfsburg (DE)
(72) Erfinder: Sacher, Dr. Patrick, 38465 Brome (DE); Schmidt, Jana, 30169 Hannover (DE); Simon, Steve, 38446 Wolfsburg (DE)

(56) Entgegenhaltungen:
- DE-A1- 1 948 136
- DE-A1- 102017 008 613
- DE-A1- 102017 130 957
- DE-A1- 102019 207 516
- DE-A1- 102020 109 971

## Beschreibung

Die vorliegende Erfindung bezieht sich auf ein Verfahren und eine Gefahrenfalleinrichtung für ein Fahrzeug zum, insbesondere automatischen, Durchführen einer Fahrzeugfunktion eines (bzw. des) Fahrzeugs zur Verminderung eines Gefahrenrisikos des Fahrzeugs im Falle eines auftretenden, sich potentiell verschlimmernden und/oder ausbreitenden Gefahrenfalls, wie beispielsweise im Falle eines Brandfalls des Fahrzeugs. Dabei wird Brandfalls bzw. der, sich potentiell verschlimmernde und/oder ausbreitende Gefahrenfall des Fahrzeugs mittels einer Sensoreinrichtung des Fahrzeugs erfasst. Die vorliegende Erfindung bezieht sich weiterhin auf ein Fahrzeug umfassend eine Gefahrenfalleinrichtung und/oder zur Durchführung des Verfahrens.

In PKWs und LKWs können Fahrzeugbrände entstehen und sich ausbreiten. Vor allem die Ausbreitung des Brades birgt enorme Gefahren. Beispielsweise kann sich ein Brand von einem LKW auf den Sattelauflieger ausdehnen. Außerdem kann die Abstellposition des brennenden Fahrzeugs erhebliche Auswirkungen auf Menschenleben, Umwelt und Sachwerte haben. Beispielsweise kann die Abstellposition auf der Fahrbahn anstelle auf dem Seitenstreifen zu zusätzlichen Gefahren führen.

Fahrzeuge werden im Brandfall in der Regel an Ort und Stelle abgestellt und verbleiben dort. Ggf. führt der Fahrer nach eigenem Ermessen die Weiterfahrt durch, um einen sicheren Abstellort zu finden bzw. Orte mit extremer Brandlast zu vermeiden. Außerdem können Sattelauflieger händisch abgekuppelt werden, um die Brandausdehnung zu reduzieren.

Die Maßnahmen der Brandreduzierung sind abhängig von den Erfahrungen / Ausbildung des PKW/LKW Fahrers. Wird das Fahrzeug auf einem unsicheren Ort abgestellt, vergrößert sich das Risiko für Insassen und Umgebung. Werden grundlegende Verhaltensregeln beim Brandfall eines Fahrzeugs nicht beachtet, vergrößert sich die Schadenslage.

Aus der DE 10 2020 109 971 A1 ist ein Verfahren und eine Vorrichtung zum Schutz einer Umgebung vor einem in Brand geratenen Fahrzeug bekannt. Bei diesem wird das Fahrzeug auf einen Brand und eine Umgebung überwacht und bei Feststellung eines Fahrzeugbrandes werden Maßnahmen zur Sicherheit der Umgebung eingeleitet. Dabei fährt als Maßnahme zur Herstellung der Umgebungssicherheit das in Brand geratene Fahrzeug selbsttätig einen für die Umgebung sicheren Standort an. Weiterhin kann das in Brand geratene Fahrzeug in seiner Umgebung Personen und Objekte unterscheiden und in Abhängigkeit von dieser Unterscheidung den sicheren Standort auswählen. In Abhängigkeit davon, ob Personen oder Objekte in der Umgebung detektiert werden, werden unterschiedliche Sicherungsmaßnahmen eingeleitet.

Aus der DE 10 2017 008 613 A1 ist ein Verfahren und System zum Begrenzen von Schäden in Verbindung mit einem Fahrzeugbrand bekannt. Dabei wird ein Fahrzeugbrand ermittelt und eine mit dem in Brand geratenen Fahrzeug verknüpfte Situation ermittelt. Weiterhin wird die ermittelte Situation von einem möglichen Schadensgesichtspunkt umfassend das Berücksichtigen der Umgebung des Fahrzeugs analysiert und in Abhängigkeit hiervon geeignete Maßnahmen zum Begrenzung von Schäden in Verbindung mit dem in Brand geratenen Fahrzeug und der Umgebung des Fahrzeugs ermittelt.

Aus der EP 3 379 201 A1 ist das automatisierte Navigieren eines Fahrzeugs im Falle einer sich ereignenden Unfallsituation, wie beispielsweise einer Reisekrankheit des Fahrers oder einer Reifenpanne des Fahrzeugs, zu einer zum sicheren Halten vorgesehenen Fahrbahnzone.

Der vorliegenden Erfindung liegt die Aufgabe zugrunde, die aus dem Stand der Technik bekannten Nachteile zu überwinden und ein Verfahren zur sowie eine Gefahrenfalleinrichtung für ein Fahrzeug bereitzustellen, welche eine Verminderung der Auswirkungen eines Gefahrenfalls, insbesondere eines Brandfalls, auf das Fahrzeug bewirken.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Bei einem erfindungsgemäßen Verfahren zum, insbesondere automatischen, Durchführen einer Fahrzeugfunktion eines Fahrzeugs zur Verminderung eines Gefahrenrisikos des Fahrzeugs im Falle eines auftretenden, sich potentiell verschlimmernden und/oder ausbreitenden Gefahrenfalls, insbesondere Brandfalls des Fahrzeugs, wird der, sich potentiell verschlimmernde und/oder ausbreitende Gefahrenfall des Fahrzeugs mittels einer Sensoreinrichtung des Fahrzeugs erfasst. Weiterhin wird wenigstens eine für ein Gefahrenrisiko des Fahrzeugs charakteristische Gefahrengröße auf Grundlage des erfassten Gefahrenfalls ermittelt.

Bei dem Gefahrenfall kann es sich bevorzugt um einen entstehenden und/oder (bereits) in wenigstens einem Fahrzeugbereich und/oder einem Bereich eines Gespanns aus einem Fahrzeug und einem Anhänger (oder einem weiteren Element des Gespanns) ausgebrochenen Fahrzeugbrand handeln. Beispielsweise handelt es sich um einen (insbesondere lokal in dem Fahrzeug begrenzten Brandherd). Denkbar ist aber auch ein anderer Gefahrenfall, welcher sich insbesondere räumlich innerhalb des Fahrzeugs (bzw. einem Gespann umfassend das Fahrzeug und wenigstens ein weiteres Element des Gespanns wie einen Anhänger) und/oder auf eine Fahrzeugumgebung ausbreiten kann.

Weiterhin wird (bevorzugt durch eine, insbesondere Prozessor-basierte, Gefahrenfalleinrichtung, insbesondere des Fahrzeugs) wenigstens eine Fahrzeugfunktion des Fahrzeugs ermittelt und (bevorzugt durch die, insbesondere Prozessor-basierte, Gefahrenfalleinrichtung, insbesondere des Fahrzeugs) wenigstens eine Prognosegröße ermittelt, welche für das Gefahrenrisiko des Fahrzeugs bei Durchführung der Fahrzeugfunktion (bevorzugt nach insbesondere im Wesentlichen vollständigem Abschluss der Fahrzeugfunktion) charakteristisch ist.

Weiterhin wird (bevorzugt durch die, insbesondere Prozessor-basierte, Gefahrenfalleinrichtung, insbesondere des Fahrzeugs) ein für die ermittelte Fahrzeugfunktion charakteristisches Fahrzeugfunktionssignal auf Grundlage der wenigstens einen Prognosegröße und der wenigstens einen Gefahrengröße ermittelt und zur automatischen Durchführung der Fahrzeugfunktion und/oder zur Ausgabe an einen Insassen des Fahrzeugs mittels einer Ausgabeeinrichtung, insbesondere des Fahrzeugs, bereitgestellt.

Bevorzugt wird die ermittelte Fahrzeugfunktion ausgeführt und/oder das Fahrzeugfunktionssignal mittels der Ausgabeeinrichtung des Fahrzeugs (an den Insassen) ausgegeben.

Bevorzugt ist von einem Nutzer des Fahrzeugs und/oder einem Fahrzeughalter vorgebbar und/oder wählbar und/oder einstellbar, ob das ermittelte Fahrzeugfunktionssignal (etwa einer Steuereinrichtung des Fahrzeugs) zur automatischen Durchführung der Fahrzeugfunktion bereitgestellt und insbesondere übermittelt wird oder ob, insbesondere und/oder ob, das ermittelte Fahrzeugfunktionssignal (einer Ausgabeeinrichtung, insbesondere des Fahrzeugs) zur Ausgabe des Fahrzeugfunktionssignals an einen Insassen bzw. Nutzer des Fahrzeugs bereitgestellt wird.

Bei dem Gefahrenrisiko kann es sich insbesondere um ein momentanes Gefahrenrisiko (des Fahrzeugs und/oder der Insassen des Fahrzeugs und/oder wenigstens eines Bereichs und bevorzugt der Gesamtheit eines Gespanns aus dem Fahrzeug und wenigstens einem weiteren (daran angekoppelten) Gespannelement wie einem Anhänger) handeln. Daneben werden bei der Ermittlung der Gefahrengröße bevorzugt zukünftige Entwicklungen des Gefahrenfalls, insbesondere eine Intensität und/oder eine räumliche Ausbreitung des Gefahrenfalls (auf weitere Gespannelemente und/oder auf einen an das Fahrzeug im Anhängerbetrieb angekoppelten Anhänger) und/oder eine Ausbreitung des Gefahrenfalls auf eine Umgebung des Fahrzeugs (und eine anschließende zukünftige Entwicklung des Gefahrenfalls in der Umgebung des Fahrzeugs) berücksichtigt.

Bevorzugt handelt es sich bei der Sensoreinrichtung zur Erfassung des Gefahrenfalls um eine Sensoreinrichtung zur Entdeckung eines Fahrzeugbrands und/oder eines Brandherds und/oder eines Schwelbrands. Die Sensoreinrichtung kann wenigstens einen Temperatursensor und bevorzugt eine Vielzahl von Temperatursensor und/oder wenigstens einen Sensor und bevorzugt eine Vielzahl von Sensoren zur Detektion von Rauchpartikeln aufweisen.

Bevorzugt wird zur Ermittlung der wenigstens einen (bevorzugt jeder) für ein Gefahrenrisiko des Fahrzeugs charakteristischen Gefahrengröße wenigstens ein Bereich einer Fahrzeugumgebung erfasst und der erfasste Bereich der Fahrzeugumgebung berücksichtigt.

Bevorzugt wird die Fahrzeugfunktion und/oder die Gefahrengröße und/oder die Prognosegröße und/oder das wenigstens eine Fahrzeugfunktionssignal ermittelt, während das Fahrzeug in Bewegung ist bzw. während der Fahrt des Fahrzeugs. Bevorzugt wird die Fahrzeugfunktion und/oder die Gefahrengröße und/oder die Prognosegröße und/oder das wenigstens eine Fahrzeugfunktionssignal ermittelt, unmittelbar (und damit innerhalb einer Minute, bevorzugt innerhalb einer halben Minute, bevorzugt innerhalb von 20 Sekunden, bevorzugt innerhalb von 10 Sekunden und besonders bevorzugt innerhalb von 5 Sekunden) nachdem der Gefahrenfall ermittelt und/oder erfasst und/oder erkannt wurde.

Insbesondere kann im Rahmen der Ermittlung der Prognosegröße berücksichtigt werden, ob sich das Fahrzeug in einem Anhängerbetrieb, mit einem an das Fahrzeug (zu einem Gespann) angekoppelten Anhänger, befindet und/oder ob das Fahrzeug Teil eines Gespanns ist. Im Falle eines Anhängerbetriebs des Fahrzeugs kann eine Lokalisierung des Gefahrenfall-Herds (etwa des Brandherds) vorgenommen und/oder bei der Ermittlung der Prognosegröße berücksichtigt werden. Bevorzugt kann ermittelt werden, ob der Gefahrenfall (noch) lokal auf das Fahrzeug oder den Anhänger beschränkt ist. Bevorzugt kann (insbesondere im Rahmen der Ermittlung der Prognosegröße) ermittelt werden, ob eine räumliche Trennung des Fahrzeugs von dem Anhänger eine Ausbreitung des Gefahrenfalls (wie etwa einen Fahrzeugbrand) auf wenigstens einen weiteren Gespannteil (wie etwa den Anhänger) durch einen (insbesondere automatischen) Abkopplungsvorgang (als insbesondere ermittelte Fahrzeugfunktion) verhindert werden kann. Kann eine solche (bevorzugt mit einer insbesondere vorgegebenen Wahrscheinlichkeit) verhindert werden, wird bevorzugt ein Fahrzeugfunktionssignal zur Durchführung der Fahrzeugfunktion (welches etwa an eine Steuereinrichtung des Fahrzeugs übermittelt wird) ermittelt und/oder bereitgestellt.

Bevorzugt erfolgt die Erfassung des (wenigstens einen Bereichs) der Fahrzeugumgebung durch wenigstens eine Umfelderfassungseinrichtung, welche Bestandteil des Fahrzeugs sein kann. Bei der Umfelderfassungseinrichtung kann es sich beispielsweise um eine (optische) Kamera und/oder Bilderfassungseinrichtung zur Erfassung räumlich aufgelöster Sensordaten, wie eine Frontkamera, eine Seitenkamera und/oder eine Heckkamera handeln.

Denkbar ist aber auch, dass es sich bei der Umfelderfassungseinrichtung um einen LIDAR- und/oder einen RADAR-Sensor und/oder einen (insbesondere räumlich aufgelösten) IR-Sensor und/oder Ultraschall-Sensor handelt.

Denkbar ist auch, dass es sich bei der Umfelderfassungseinrichtung um eine in Bezug auf das Fahrzeug externe Sensoreinrichtung zur Erfassung des Fahrzeugumfelds (des Fahrzeugs) handelt, welche den erfassten Bereich des Fahrzeugumfelds (insbesondere drahtlos, beispielsweise via eine Car-2-Car- oder Car-2-Infrastruktur-Kommunikation) an das Fahrzeug und insbesondere an die Gefahrenfalleinrichtung (zur Ermittlung der wenigstens einen Gefahrengröße) übermittelt. Beispielsweise kann es sich bei der Umfelderfassungseinrichtung um eine Sensoreinrichtung eines von dem Fahrzeug verschiedenen Fahrzeug (welches sich bevorzugt in dem Fahrzeugumfeld des Fahrzeugs befindet) und/oder einer (stationären) Infrastruktur (in dem Fahrzeugumfeld des Fahrzeugs) handeln.

Bei der Fahrzeugfunktion handelt es sich insbesondere um eine von dem Fahrzeug (insbesondere in seiner Gesamtheit) (insbesondere ausschließlich automatisiert durch das Fahrzeug selbst und/oder unter Unterstützung wenigstens eines Nutzers bzw. Insassen des Fahrzeugs) ausführbare Fahrzeugfunktion (etwa ein automatisches Abkoppeln eines Anhängers und/oder ein Bewegen des Fahrzeugs an einen anderen (Abstell-)Ort).

Mit anderen Worten schlägt die vorliegende Erfindung vor, dass das Fahrzeug bzw. eine Gefahrenfalleinrichtung des Fahrzeugs eine (von dem Fahrzeug wenigstens teilweise ausführbare) Fahrzeugfunktion ermittelt, welche das Gefahrenrisiko des Fahrzeugs und/oder der Insassen des Fahrzeugs (und/oder der Fahrzeugumgebung) verbessert. Hierdurch können vorteilhaft die Risiken für Menschleben, Umwelt und Sachwerte reduziert werden.

Bevorzugt erfolgt die Ermittlung des Fahrzeugfunktionssignals auf Grundlage eines Vergleichs der wenigstens einen Prognosegröße und der wenigstens einen Gefahrengröße. Bevorzugt wird eine Fahrzeugfunktion (aus einer Vielzahl von ermittelten Fahrzeugfunktionen) ausgewählt, bei welcher sich eine Prognosegröße ergibt, welche das (in Bezug auf das momentane Gefahrenrisiko und/oder das jeweilige Gefahrenrisiko der übrigen Vielzahl ermittelter Fahrzeugfunktionen) kleinste Gefahrenrisiko (insbesondere für das Fahrzeug und/oder die Insassen des Fahrzeugs) darstellt. Bevorzugt wird eine Fahrzeugfunktion ermittelt und/oder ausgewählt, bei deren Durchführung ein Gefahrenzustand bzw. das Gefahrenrisiko des Fahrzeugs und/oder der Insassen und/oder einzelner Gespannteile (in Bezug auf den Gefahrenfall) reduziert und/oder abgemildert und/oder begrenzt und/oder zumindest eine stärkere Ausbreitung oder Entwicklung verhindert werden kann.

Weiterhin wird (bevorzugt durch die, insbesondere Prozessor-basierte, Gefahrenfalleinrichtung, insbesondere des Fahrzeugs) ein für die ermittelte Fahrzeugfunktion charakteristisches Fahrzeugfunktionssignal auf Grundlage der wenigstens einen Prognosegröße und der wenigstens einen Gefahrengröße ermittelt

Bevorzugt betrifft die vorliegende Erfindung eine automatische Fahrzeugabstellung im Gefahrenfall und insbesondere im Brandfall.

Bei einem erfindungsgemäßen Verfahren handelt es sich bei einem Fahrzeug, welches Teil eines Gespanns aus einem Zugfahrzeug (wobei bevorzugt das Fahrzeug das Zugfahrzeug bildet) und wenigstens einem Anhänger ist, bei der ermittelten Fahrzeugfunktion um einen, insbesondere automatischen, Abkoppelvorgang des Fahrzeugs aus dem Gespann. Dies verhindert vorteilhaft eine Brandausdehnung auf einen bis dahin noch nicht betroffenen Teil, wie etwa einen Anhänger, des Gespanns.

Bevorzugt handelt es sich bei der wenigstens einen und/oder bei einer (insbesondere weiteren) Fahrzeugfunktion um eine Fahrerassistenzfunktion, etwa eine Navigation des Nutzers des Fahrzeugs (zu einem Fahrziel), und/oder eine (wenigstens halb- und bevorzugt vollautomatische) Fahrfunktion des Fahrzeugs.

Bei einem weiter bevorzugten Verfahren umfasst die Ermittlung der Fahrzeugfunktion eine Ermittlung eines Fahrziels des Fahrzeugs, an welchem der Abkopplungsvorgang eines an dem Fahrzeug angekoppelten Anhängers vorgenommen wird. Bevorzugt wird bei Erreichen dieses Fahrziels ein (automatischer) Abkopplungsvorgang des Anhängers von dem Fahrzeug initiiert. Bevorzugt wird hierzu ein Schließmechanismus der Kopplung zwischen dem Anhänger und dem Fahrzeug angesteuert und dieser (automatisch ausgelöst durch eine Steuereinrichtung des Fahrzeugs) geöffnet.

Bevorzugt wird, insbesondere nach einer Branderkennung, ein Abstellort und/oder Fahrziel des Fahrzeugs ermittelt. Bevorzugt wird insbesondere nach optischen und/oder akustischen Hinweisen (im Fahrzeug), welche insbesondere über eine bzw. die Ausgabeeinrichtung ausgegeben werden, ein insbesondere automatischer (sicherer) Abstellvorgang (an diesem ermittelten Abstellort und/oder Fahrziel) eingeleitet. Bevorzugt wird hierzu die Geschwindigkeit des Fahrzeugs reduziert und/oder (bei Bedarf) ein Fahrspurwechsel, insbesondere auf den Standstreifen, eingeleitet.

Bevorzugt wird ein automatisiertes Abkoppeln von Anhänger und/oder einem Anhängerstecker (zur elektrischen Verbindung zwischen dem Fahrzeug und dem Anhänger), insbesondere im Brandfall, vorgenommen. Ein automatischer Abkoppelvorgang verhindert vorteilhaft eine Brandausdehnung auf den (an dem Fahrzeug angekoppelten) Anhänger.

Bevorzugt erfolgt eine Risikobewertung des (Fahrzeug-)Abstellorts und/oder des (Anhänger- )Abstellorts (bevorzugt durch die Gefahrenfalleinrichtung). Besonders bevorzugt erfolgt eine Ermittlung des (Fahrzeug-)Abstellorts und/oder des (Anhänger-)Abstellorts auf Grundlage der (ermittelten) Risikobewertung.

Bei einem weiter bevorzugten Verfahren umfasst die Ermittlung der Fahrzeugfunktion eine Ermittlung eines Abstellorts des Anhängers des Gespanns und bevorzugt des Zugfahrzeugs (bzw. des Fahrzeugs) des Gespanns. Insbesondere werden damit (durch die Gefahrenfalleinrichtung des Fahrzeugs) bevorzugt wenigstens zwei Abstellorte bestimmt, wobei ein Abstellort ein Abstellort für einen an das Fahrzeug (bei Erfassung des Gefahrenfalls) angekoppelten Anhängers ist und ein zweiter Abstellort der Abstellort für das Fahrzeug selbst ist. Dies bietet den Vorteil, dass sowohl für den Anhänger als auch für das Fahrzeug ein für jeweils diese (insbesondere unter Berücksichtigung deren jeweiligen Gefahrenrisiken) sicherer Abstellort ermittelt wird.

Bei einem weiter bevorzugten Verfahren wird (insbesondere im Wesentlichen unmittelbar im Anschluss) nach einem (insbesondere vollständig abgeschlossenen) Abkoppelvorgang eine automatische Abstandsvergrößerung zwischen dem Zugfahrzeug und dem Anhänger vorgenommen. Bevorzugt wird insbesondere im Brandfall nach dem Abkoppelvorgang zwischen dem Fahrzeug und dem (hieran zu einem Gespann gekoppelten) Anhänger eine automatische Abstandsvergrößerung vorgenommen. Dies bietet den Vorteil, dass eine Ausbreitung des Gefahrenfalls, etwa des Fahrzeugbrands, auf den (bis zur Abkopplung noch nicht betroffenen) Anhänger verhindert werden kann und somit das Gefahrenrisiko verringert werden kann.

Unter einer automatischen Abstandsvergrößerung zwischen Fahrzeug und Anhänger wird insbesondere verstanden, dass das Fahrzeug (insbesondere nach dem Abkoppelvorgang) automatisch anfährt und den Abstand zum Anhänger vergrößert. Bevorzugt erfolgt die (automatische) Abstandsvergrößerung unter Aktivierung der Warnblinkeinrichtung.

Bevorzugt erfolgt die automatische Abstandsvergrößerung auf Grundlage von von einer Umfelderfassungseinrichtung (z.B. Kameras insbesondere des Fahrzeugs) erfassten Sensordaten zur Wahrnehmung der Fahrzeugumgebung. Hierdurch kann vorteilhaft ein sicheres Fahren gewährleistet werden.

Bevorzugt wird eine Abstandsvergrößerung vorgenommen, bis ein Minimalabstand zwischen dem Anhänger und dem Fahrzeug von mindestens 5 Meter, bevorzugt mindestens 10 Meter, bevorzugt mindestens 20 Meter, bevorzugt mindestens 50 Meter und besonders bevorzugt mindestens 100 Meter erreicht ist.

Bevorzugt wird (als Endziel der Abstandsvergrößerung) ein Abstellort des Fahrzeugs (insbesondere durch die Gefahrenfalleinrichtung des Fahrzeugs) ermittelt, welches in einem Umkreis von mindestens 5 Meter, bevorzugt mindestens 10 Meter, bevorzugt mindestens 20 Meter, bevorzugt mindestens 50 Meter und besonders bevorzugt mindestens 100 Meter von dem Abstellort des Anhängers liegt.

Bevorzugt wird bei der Ermittlung des (zu erreichenden) Abstands zwischen dem Abstellort des Anhängers und dem Abstellort des Fahrzeugs die Gefahrengröße und/oder das Gefahrenrisiko berücksichtigt.

Bei einem weiter bevorzugten Verfahren wird zur Ermittlung der Fahrzeugfunktion ein Fahrziel des Fahrzeugs ermittelt, welches als Abstellort für das Fahrzeug zur Verminderung eines Gefahrenrisikos des Fahrzeugs geeignet und bestimmt ist. Dadurch kann vorteilhaft ein Abstellvorgang (etwa im Brandfall und/oder nach Branderkennung) automatisiert und mit möglichst geringen Risiken durchgeführt werden.

Bevorzugt basiert die Ermittlung der Prognosegröße auf einer Bewertung des (Gefahren- )Risikos des (ermittelten) Abstellorts (des Fahrzeugs). Vorteilhaft erfolgt eine Bewertung der Risiken eines Abstellorts (im Brandfall) von einem Algorithmus.

Bei einem weiter bevorzugten Verfahren wird bei der Ermittlung des Fahrziels des Fahrzeugs und/oder des Anhängers (welcher insbesondere als Abstellort des Fahrzeugs bzw. des Anhängers dient und/oder geeignet und bestimmt ist) eine momentane Fahrspur des Fahrzeugs, eine Fahrbahnart, eine Brandlast der Fahrzeugumgebung, eine maximale Entfernung von dem momentanen Aufenthaltsort des Fahrzeugs, eine momentane Geschwindigkeit des Fahrzeugs, eine vorgegebene maximale Geschwindigkeit des Fahrzeugs, eine Verkehrsdichte in dem Fahrzeugumfeld des Fahrzeugs und/oder dergleichen berücksichtigt. Insbesondere wird wenigstens ein Objekt und bevorzugt eine Vielzahl von Objekten aus dem Fahrzeugumfeld erfasst und eine Entflammbarkeit und/oder eine Brandlast des Objekts bzw. jedes Objekts der erfassten Vielzahl von Objekten ermittelt und/oder bewertet. Bevorzugt werden die Objekte in verschiedene Kategorien auf Grundlage der ermittelten Entflammbarkeit und/oder Brandlast eingeteilt und bevorzugt basierend auf dieser (eingeteilten) Kategorie die (wenigstens eine) Prognosegröße ermittelt.

Bevorzugt erfolgt die Ermittlung des Fahrziels des Fahrzeugs und/oder des Anhängers, welcher insbesondere als Abstellort des Fahrzeugs bzw. des Anhängers dient und/oder geeignet und bestimmt ist, unter Verwendung eines Modell maschinellen Lernens, welches etwa durch ein (trainiertes) neuronales Netz gegeben ist. Bevorzugt basiert der Trainingsvorgang des neuronalen Netzes auf einer Vielzahl von verschiedenen Fahrzeugen und/oder Fahrzeugumgebungen aufgetretenen Gefahrenfälle und einer (anschließender) Bewertung von deren jeweiligen Gefahrenrisiken.

Bevorzugt wird einer jeweiligen Position des Fahrzeugs in Bezug auf eine Fahrbahnart (Brücke, Landstraße, Autobahn) und/oder einer Fahrspur (linke Fahrspur, Standstreifen, Auffahrt) und/oder eine Position des Fahrzeugs in Bezug auf die Präsenz andere Fahrzeuge im Fahrzeugumfeld und/oder in Bezug eine Gefahrenstelle im Fahrzeugumfeld des Fahrzeugs (etwa Baustellen) und/oder die Präsenz von Personen im Fahrzeugumfeld (etwa Menschenansammlungen) und/oder eine Brandlast der Fahrzeugumgebung und/oder ein Einfluss der Umgebung auf eine Entwicklung des Gefahrenfalls eine (insbesondere vorgegebene) Bewertung und/oder Gewichtung zugeordnet, welche bevorzugt bei einer Ermittlung der Gefahrengröße und/oder der Prognosegröße berücksichtigt wird.

Es können dabei voneinander verschiedene Gewichtungen verwendet werden. Auf einer dreispurigen Autobahn erhält beispielsweise die linke Fahrspur die größte Kritikalität. Der Standstreifen hingegen erhält bevorzugt die geringste Kritikalität, so dass der Algorithmus bevorzugt die Fahrzeugstellung bewertet. Es werden hinsichtlich der Fahrspurwahl jedoch bevorzugt noch weitere Informationen bewertet. Beispielsweise erhält der Abstellort auf dem Standstreifen eine höhere Kritikalität, wenn Auffahrten, Baustellen oder andere Fahrzeuge sich auf diesem befinden.

Bevorzugt werden optische Hinweise zum empfohlenen und/oder ermittelten Fahrziel und/oder Abstellort (des Fahrzeugs und/oder eines Anhängers), bevorzugt durch Anzeige des Fahrziels und/oder des Abstellorts, (insbesondere im Brandfall), insbesondere mittels wenigstens einer optischen Ausgabeeinrichtung, (an den Nutzer bzw. den Insassen des Fahrzeugs) gegeben (insbesondere in Abhängigkeit der ermittelten Gefahrengröße und/oder der ermittelten Prognosegröße).

Zusätzlich oder alternativ werden bevorzugt optische Hinweise in Bezug auf zu vermeidenden (Fahrzeug- und/oder Anhänger-)Abstellorte, bevorzugt durch Anzeige des (Fahrzeug- und/oder Anhänger-)Abstellorts, (insbesondere im Brandfall), insbesondere mittels wenigstens einer optischen Ausgabeeinrichtung, (an den Nutzer bzw. den Insassen des Fahrzeugs) gegeben (insbesondere in Abhängigkeit der ermittelten Gefahrengröße und/oder der ermittelten Prognosegröße).

Bevorzugt werden akustische Hinweise zum empfohlenen und/oder ermittelten Fahrziel und/oder Abstellort (des Fahrzeugs und/oder eines Anhängers) (insbesondere im Brandfall), insbesondere mittels wenigstens einer akustischen Ausgabeeinrichtung, (an den Nutzer bzw. den Insassen des Fahrzeugs) gegeben (insbesondere in Abhängigkeit der ermittelten Gefahrengröße und/oder der ermittelten Prognosegröße).

Zusätzlich oder alternativ werden bevorzugt akustische Hinweise in Bezug auf zu vermeidenden (Fahrzeug- und/oder Anhänger-)Abstellorte (insbesondere im Brandfall), insbesondere mittels wenigstens einer akustischen Ausgabeeinrichtung, (an den Nutzer bzw. den Insassen des Fahrzeugs) gegeben (insbesondere in Abhängigkeit der ermittelten Gefahrengröße und/oder der ermittelten Prognosegröße).

Dies bietet den Vorteil, dass ein Abstellort eines (beispielsweise brennenden) Fahrzeugs (etwa eines PKWs/LKWs) und/oder dessen (brennenden) Anhängers durch Anzeige und/oder Ansage an einen Nutzer, insbesondere Fahrer, des Fahrzeugs empfohlen und/oder ausgegeben wird.

Die vorliegende Erfindung ist weiterhin gerichtet auf eine Gefahrenfalleinrichtung für ein Fahrzeug zur, insbesondere automatischen, Durchführen einer Fahrzeugfunktion des Fahrzeugs zur Verminderung eines Gefahrenrisikos des Fahrzeugs im Falle eines auftretenden, sich potentiell verschlimmernden und/oder ausbreitenden Gefahrenfalls, insbesondere Brandfalls des Fahrzeugs, wobei das Fahrzeug eine Sensoreinrichtung zur Erfassung des, sich potentiell verschlimmernden und/oder ausbreitenden Gefahrenfalls des Fahrzeugs aufweist.

Erfindungsgemäß ist die (insbesondere Prozessor-basierte) Gefahrenfalleinrichtung dazu geeignet und bestimmt, wenigstens eine für ein Gefahrenrisiko des Fahrzeugs charakteristische Gefahrengröße auf Grundlage des erfassten Gefahrenfalls zu ermitteln, wenigstens eine Fahrzeugfunktion des Fahrzeugs zu ermitteln und wenigstens eine Prognosegröße zu ermitteln, welche für das Gefahrenrisiko des Fahrzeugs bei Durchführung der Fahrzeugfunktion charakteristisch ist.

Dabei ist die Gefahrenfalleinrichtung zur Bereitstellung eines für die ermittelte Fahrzeugfunktion charakteristischen Fahrzeugfunktionssignals auf Grundlage der wenigstens einen Prognosegröße und der wenigstens einen Gefahrengröße zur automatischen Durchführung der Fahrzeugfunktion und/oder zur Ausgabe an einen Insassen des Fahrzeugs mittels einer Ausgabeeinrichtung des Fahrzeugs geeignet und bestimmt.

Bevorzugt ist die Gefahrenfalleinrichtung Bestandteil des Fahrzeugs und insbesondere nicht zerstörungsfrei entfernbarer Bestandteil des Fahrzeugs.

Es wird also auch im Rahmen der erfindungsgemäßen vorgeschlagen, dass für das Fahrzeug eine (von dem Fahrzeug wenigstens teilweise und bevorzugt in seiner Gesamtheit ausführbare) Fahrzeugfunktion ermittelt wird, welche ein Gefahrenrisiko (in Bezug auf das Fahrzeug und/oder die Insassen des Fahrzeugs) reduziert.

Bevorzugt handelt es sich bei der Ausgabeeinrichtung um eine Ausgabeeinrichtung des Fahrzeugs. Denkbar ist aber auch, dass es sich bei der Ausgabeeinrichtung um eine Ausgabeeinrichtung eines Nutzers, wie etwa ein (mobiles) Endgerät eines Nutzers bzw. Insassen des Fahrzeugs, (wie etwa ein Smartphone oder ein Tablet) handelt.

Bevorzugt handelt es sich bei der Ausgabeeinrichtung um eine optisches und/oder akustische Ausgabeeinrichtung. Beispielsweise kann es sich bei der Ausgabeeinrichtung um ein Kombiinstrument, ein MIB (modulares Infotainment-Baukasten) und/oder ein Head-up-Display und/oder ein Display (etwa der Mittelkonsole) handeln. Bevorzugt handelt es sich bei der Ausgabeeinrichtung um diejenige welche für eine Navigation des Fahrers verwendet wird. So kann etwa ein (ermittelter) Abstellort im Rahmen einer Navigationsfunktion (des Fahrzeugs) dargestellt und/oder angezeigt werden.

Bevorzugt handelt es sich bei der akustischen Ausgabeeinrichtung um einen Lautsprecher (des Fahrzeugs). Bevorzugt werden Informationen über diesen Lautsprecher insbesondere zum (sicheren) Abstellort) (bei Fahrzeugbrand) gegeben.

Bevorzugt ist die Gefahrenfalleinrichtung dazu eingerichtet, geeignet und/oder bestimmt, bereits obig im Zusammenhang mit dem Verfahren beschriebene Verfahrensschritte einzeln oder in Kombination miteinander, insbesondere in Bezug auf die im Zusammenhang mit der Gefahrenfalleinrichtung beschriebene Verfahrensschritte, auszuführen. Umgekehrt kann das Verfahren mit allen im Rahmen der Gefahrenfalleinrichtung beschriebenen Merkmalen einzeln oder in Kombination miteinander ausgestattet sein.

Die vorliegende Erfindung ist weiterhin gerichtet auf ein Fahrzeug, insbesondere Kraftfahrzeug, umfassend eine obig beschriebene Gefahrenfalleinrichtung für ein Fahrzeug entsprechend einer Ausführungsform.

In einer vorteilhaften Ausführungsform weist das Fahrzeug eine Anhängerkupplung zur Kopplung mit einem Anhänger zu einem Gespann auf, wobei die Anhängerkupplung derart ausgebildet ist, dass eine mechanische Trennung der Kopplung zwischen dem Anhänger und dem Fahrzeug unmittelbar eine Trennung einer elektrischen Verbindung zwischen dem Anhänger und dem Fahrzeug bewirkt. Bevorzugt sind (wechselseitig) eine mechanische Verbindung und eine elektrische Verbindung zwischen dem Fahrzeug und dem Anhänger lediglich gleichzeitig und/oder zeitgleich trennbar. Dies bietet den Vorteil, dass nur ein Abkopplungsschritt erforderlich ist und somit eine zeitlich schnelle Abkopplung erfolgen kann.

Bevorzugt weist die Kupplung des Fahrzeugs, an welchen ein Anhänger zu einem Gespann koppelbar ist und/oder gekoppelt ist, eine Kuppelstange auf, in welchem (insbesondere mittig und/oder zentral) eine Kabelleitung integriert ist.

Bevorzugt ist eine Kabelleitung bzw. eine elektrische Verbindung zwischen dem Fahrzeug und dem Anhänger vollumfänglich von der bzw. von einer Kuppelstange und/oder einer (insbesondere zugstabilen) mechanischen Verbindung zwischen dem Fahrzeug und dem Anhänger umgeben.

Bei dem Fahrzeug kann es sich insbesondere um ein (motorisiertes) Straßenfahrzeug handeln. Dabei kann es sich um einen Personenkraftwagen (PKW) oder einen Lastkraftwagen (LKW) handeln.

Bei einem Fahrzeug kann es sich um ein Kraftfahrzeug handeln, welches insbesondere ein von dem Fahrer selbst gesteuertes Kraftfahrzeug ("Driver only"), ein halbautonomes, autonomes (beispielsweise der Autonomiestufe Level 3 oder 4 oder 5 (der Norm SAE J3016)) oder selbstfahrendes Kraftfahrzeug ist. Die Autonomiestufe Level 5 bezeichnet dabei vollautomatisch fahrende Fahrzeuge. Ebenso kann es sich bei dem Fahrzeug um ein fahrerloses Transportsystem handeln. Das Fahrzeug kann dabei von einem Fahrer gesteuert werden oder autonom fahren. Darüber hinaus kann es sich bei dem Fahrzeug neben einem Straßenfahrzeug auch um ein Flugtaxi, ein Flugzeug und ein anderes Fortbewegungsmittel oder eine andere Fahrzeugart handeln, beispielsweise ein Luft-, Wasser- oder Schienenfahrzeug.

Die vorliegende Erfindung des Verfahrens zum, insbesondere automatischen, Durchführen einer Fahrzeugfunktion eines Fahrzeugs zur Verminderung eines Gefahrenrisikos des Fahrzeugs im Falle eines auftretenden, sich potentiell verschlimmernden und/oder ausbreitenden Gefahrenfalls wurden im Zusammenhang mit einem Fahrzeug beschrieben. Die vorliegende Erfindung, insbesondere ein Algorithmus zur Bewertung eines Brandrisikos und Empfehlungen zu Abstellorten, kann aber auch grundsätzlich in der gesamten Transportindustrie Anwendung finden (beispielsweise Zug). Die Anmelderin behält sich vor, ein hierauf gerichtetes Verfahren und eine Gefahrenfalleinrichtung ebenfalls zu beanspruchen.

Die vorliegende Erfindung ist weiterhin gerichtet auf ein Computerprogramm oder Computerprogrammprodukt, umfassend Programmmittel, insbesondere einen Programmcode, welcher zumindest einzelne Verfahrensschritte des erfindungsgemäßen Verfahrens, insbesondere die mittels der Gefahrenfalleinrichtung ausgeführten Verfahrensschritte, und bevorzugt eine der beschriebenen bevorzugten Ausführungsformen repräsentiert oder kodiert und zum Ausführen durch eine Prozessoreinrichtung ausgebildet ist.

Die vorliegende Erfindung ist weiterhin gerichtet auf einen Datenspeicher, auf welchem zumindest eine Ausführungsform des erfindungsgemäßen Computerprogramms oder einer bevorzugten Ausführungsform des Computerprogramms gespeichert ist.

Weitere Vorteile und Ausführungsformen ergeben sich aus den beigefügten Zeichnungen:
Darin zeigen:
- Fig. 1: eine schematische Darstellung eines Fahrzeugs mit einer erfindungsgemäßen Gefahrenfalleinrichtung;
- Fig. 2: ein schematisches Ablaufdiagramm eines erfindungsgemäßen Verfahrens entsprechend einer Ausführungsform; und
- Fig. 3: ein schematisches Ablaufdiagramm eines erfindungsgemäßen Verfahrens entsprechend einer weiteren Ausführungsform.

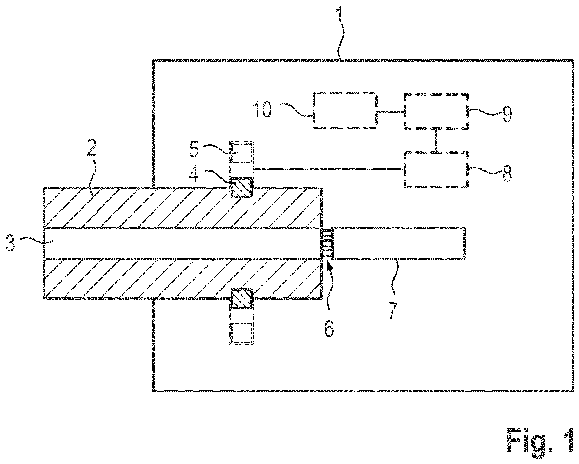

Fig. 1 zeigt eine schematische Darstellung eines Fahrzeugs 1 mit einer erfindungsgemäßen Gefahrenfalleinrichtung 10 und/oder einer automatischen Abkoppeleinrichtung (beispielsweise im Brandfall).

Bevorzug werden nach einem sicheren Abstellvorgang des Fahrzeugs 1, weitere automatische Maßnahmen eingeleitet. So wird beispielsweise bei einem PKW der Anhänger automatisch abgekoppelt. Dabei erhält eine Steuereinrichtung 8 des Fahrzeugs bzw. das Steuergerät mit dem Algorithmus zum Abkoppelvorgang 8 ein Signal aus einer Sensoreinrichtung 9 zur Ermittlung eines Gefahrenfalls des Fahrzeugs 1 bzw. aus der Sensorik Branderkennung 9. Im nächsten Schritt wird ein Schließmechanismus 4 und 5 angesteuert und öffnet diesen (z.B. Ringschellen). Das Bezugszeichen 4 kennzeichnet dabei den Schließmechanismus in geschlossenem Zustand und das Bezugszeichen 5 den Schließmechanismus in offenem Zustand.

Bevorzugt stellt die Gefahrenfalleinrichtung 10 der Steuereinrichtung 8 ein (Fahrzeugfunktions- )Signal bereit, welches den Abkoppelvorgang initiiert bzw. auslöst. Wenn nun das Fahrzeug 1 weiterfährt, besteht bevorzugt keine mechanische Verbindung mehr zu dem Fahrzeug 1 und der Kuppelstange 2. Möglich wird dies, indem die Kabelleitungen in die Kuppelstange integriert sind 3.

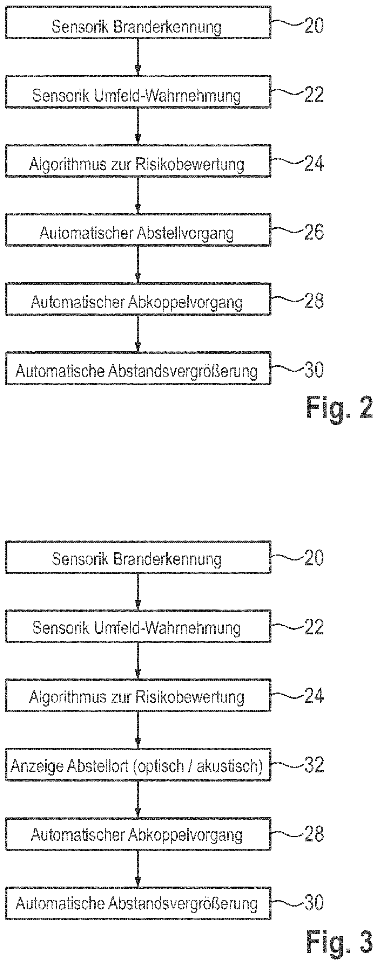

Fig. 2 zeigt ein schematisches Ablaufdiagramm eines erfindungsgemäßen Verfahrens entsprechend einer Ausführungsform, hier eines automatischen Abstellvorgangs eines Fahrzeugs 1. Der Verfahrensschritt 20 illustriert eine Sensorik 9 Branderkennung bzw. eine Sensoreinrichtung zur Erkennung eines Gefahrenfalls und insbesondere eines Brandfalls des Fahrzeugs 1. Die Sensorik 9 zur Branderkennung bzw. zur Brandentstehung ist bevorzugt im Fahrzeug 1 integriert. Somit können Brände detektiert und insbesondere frühzeitig an das System und den Fahrer gemeldet werden.

Bevorzugt weist das Fahrzeug 1 Umfeldsensorik wie Kameras (Frontkamera, Seitenkameras, Heckkamera) bzw. eine Sensorik zur Umfeldwahrnehmung bzw. eine (Umfeld- )Sensoreinrichtung zur Erfassung bzw. Wahrnehmung des Fahrzeugumfelds auf, welche (hier in Verfahrensschritt 22) insbesondere die Umgebung des Fahrzeugs 1 bewerten.

Bevorzugt weist das Fahrzeug und insbesondere die Gefahrenfalleinrichtung 10 des Fahrzeugs 1 eine Auswerteeinrichtung auf, welche bevorzugt einen Algorithmus zur Risikobewertung durchführt (siehe Verfahrensschritt 24). Es werden beispielsweise Fahrspuren, Menschenansammlungen, Brücken und zusätzliche Brandlasten erkannt und bewertet. Die Funktion des Algorithmus wird beispielhaft an der Bewertung der Fahrspur erklärt. Auf einer Dreispurigen Autobahn erhält die linke Fahrspur die größte Kritikalität. Der Standstreifen hingegen die geringste Kritikalität, sodass der Algorithmus die Fahrzeugabstellung auf dem Standstreifen bevorzugt. Es werden bevorzugt hinsichtlich der Fahrspurwahl jedoch noch weitere Informationen bewertet. Beispielsweise erhält der Abstellort auf dem Standstreifen eine höhere Kritikalität, wenn Auffahrten, Baustellen oder andere Fahrzeuge sich dort befinden. Unter Berücksichtigung dieser Informationen wir ein optimaler Abstellort ermittelt.

Mit dieser Information aus dem Algorithmus wird nach einer Branderkennung der Abstellort des Fahrzeugs definiert. Es wird, bevorzugt nach optischen und akustischen Hinweisen im Fahrzeug (Lautsprecher, MIB (Abkürzung für modularer Infotainment Baukausten), Kombi (Abkürzung für Kombi-Instrument)), ein automatischer sicherer Abstellvorgang eingeleitet. Dazu wird bevorzugt die Geschwindigkeit des Fahrzeugs reduziert und bei Bedarf ein Fahrspurwechsel auf den Standstreifen eingeleitet.

Nach dem sicheren und bevorzugt automatischen Abstellvorgang (siehe Verfahrensschritt 26) werden bevorzugt weitere Maßnahmen eingeleitet wie beispielsweise eine Durchführung eines, insbesondere automatischen, Abkopplungsvorgangs (siehe Verfahrensschritt 28) eines Anhängers von dem Fahrzeug 1, wie insbesondere im Rahmen der Figur 1 beschrieben.

Auch bei einem LKW wird die Verbindung zwischen Zugmaschine und Anhänger automatisch getrennt. Außerdem ist es denkbar, für diesen Einsatzzwecke eine Kupplungsstange mit integrierte Kabelleitung zu verwenden. Nach diesem Abkoppelvorgang wird eine Automatische Abstandsvergrößerung zwischen Fahrzeug und Anhänger eingeleitet, was durch das Bezugszeichen 30 gekennzeichnet ist. Das bedeutet, dass das Fahrzeug nach dem Abkoppelvorgang automatisch anfährt und den Abstand zum Anhänger vergrößert. Dies geschieht bevorzugt unter Aktivierung der Warnblinkeinrichtung. Außerdem wird die Umfeldwahrnehmung (z.B. Kameras) verwendet, um ein sicheres Fahren zu gewährleisten.

Sollte der Automatische Abstellvorgang nicht durchführbar sein oder nicht gewünscht werden, dann erhalten die Insassen Hinweise zu einem geeigneten Ort der sicheren Abstellung.

Dies ist in dem in Fig. 3 dargestellten Ablaufdiagramm veranschaulicht (in welchem (insbesondere einzig) anstelle des Verfahrensschritts des automatischen Abstellvorgangs 26 der Verfahrensschritt der Anzeige eines Abstellorts (optisch/akustisch) durchgeführt wird, was durch das Bezugszeichen 32 gekennzeichnet ist). Dazu werden bevorzugt anzeigende Elemente wie Kombi, MIB und Head-Up-Display angesteuert. Außerdem kann in der Navigationsfunktion ein geeigneter Ort angezeigt werden. Zusätzlich können Informationen über Lautsprecher zum sicheren Abstellort bei Fahrzeugbrand gegeben werden.

Die in Fig. 2 dargestellte Ausführungsform eines erfindungsgemäßen Verfahrens ist insbesondere zu bevorzugen, um eine automatisierte sichere Abstellung des Fahrzeugs 1 zu gewährleisten.

Die in Fig. 3 dargestellte Ausführungsform eines erfindungsgemäßen Verfahrens kann bevorzugt angewendet werden, wenn ein automatischer Abstellvorgang vom Kunden bzw. vom Nutzer des Fahrzeugs nicht gewünscht ist.

### Bezugszeichenliste

- 1: Fahrzeug
- 2: Kupplungsstange Anhänger
- 3: Kabelleitung in Kupplungsstange
- 4: Schließmechanismus geschlossen
- 5: Schließmechanismus offen
- 6: Steckverbindung
- 7: Kabelleitung Fahrzeug Steuereinrichtung
- 8: bzw. Steuergerät mit Algorithmus Abkoppelvorgang
- 9: Sensoreinrichtung bzw. Sensorik zur Branderkennung
- 10: Gefahrenfalleinrichtung
- 20 - 32: Verfahrensschritte

## Patentansprüche

1. Verfahren zum, insbesondere automatischen, Durchführen einer Fahrzeugfunktion eines Fahrzeugs (1), welches Teil eines Gespanns aus einem Zugfahrzeug und wenigstens einem Anhänger ist, zur Verminderung eines Gefahrenrisikos des Fahrzeugs (1) im Falle eines auftretenden, sich potentiell verschlimmernden und/oder ausbreitenden Gefahrenfalls, insbesondere Brandfalls des Fahrzeugs (1), umfassend:
- Erfassung des, sich potentiell verschlimmernden und/oder ausbreitenden Gefahrenfalls des Fahrzeugs (1) mittels einer Sensoreinrichtung (9) des Fahrzeugs (1) und Ermitteln wenigstens einer für ein Gefahrenrisiko des Fahrzeugs (1) charakteristischen Gefahrengröße auf Grundlage des erfassten Gefahrenfalls;
- Ermitteln wenigstens einer Fahrzeugfunktion des Fahrzeugs (1), wobei es sich bei der ermittelten Fahrfunktion um einen, insbesondere automatischen, Abkoppelvorgang des Fahrzeugs (1) aus dem Gespann handelt und Ermittlung wenigstens einer Prognosegröße, welche für das Gefahrenrisiko des Fahrzeugs (1) bei Durchführung der Fahrzeugfunktion charakteristisch ist;
- Ermittlung eines für die ermittelte Fahrzeugfunktion charakteristischen Fahrzeugfunktionssignals auf Grundlage der wenigstens einen Prognosegröße;
- Bereitstellung des ermittelten Fahrzeugfunktionssignals der wenigstens einen Gefahrengröße zur automatischen Durchführung der Fahrzeugfunktion und/oder zur Ausgabe an einen Insassen des Fahrzeugs (1) mittels einer Ausgabeeinrichtung, insbesondere des Fahrzeugs (1).

2. Verfahren nach dem vorhergehenden Anspruch, **dadurch gekennzeichnet, dass** die Ermittlung der Fahrzeugfunktion eine Ermittlung eines Fahrziels des Fahrzeugs (1) umfasst, an welchem der Abkopplungsvorgang eines an dem Fahrzeug (1) angekoppelten Anhängers vorgenommen wird.

3. Verfahren nach einem der vorangegangenen Ansprüche, **dadurch gekennzeichnet, dass** die Ermittlung der Fahrzeugfunktion eine Ermittlung eines Abstellorts des Anhängers des Gespanns und bevorzugt des Zugfahrzeugs des Gespanns umfasst.

4. Verfahren nach einem der vorangegangenen Ansprüche , **dadurch gekennzeichnet, dass** nach einem Abkoppelvorgang eine automatische Abstandsvergrößerung zwischen dem Zugfahrzeug und dem Anhänger vorgenommen wird.

5. Verfahren nach einem der vorangegangenen Ansprüche, **dadurch gekennzeichnet, dass** zur Ermittlung der Fahrzeugfunktion ein Fahrziel des Fahrzeugs (1) ermittelt wird, welches als Abstellort für das Fahrzeug (1) zur Verminderung eines Gefahrenrisikos des Fahrzeugs (1) geeignet und bestimmt ist und/oder bei der Ermittlung des Fahrziels des Fahrzeugs (1) eine momentane Fahrspur des Fahrzeugs (1), eine Fahrbahnart (1), eine Brandlast der Fahrzeugumgebung, eine maximale Entfernung von dem momentanen Aufenthaltsort des Fahrzeugs (1), eine momentane Geschwindigkeit des Fahrzeugs (1), eine vorgegebene maximale Geschwindigkeit des Fahrzeugs (1), eine Verkehrsdichte in dem Fahrzeugumfeld des Fahrzeugs (1) und/oder dergleichen berücksichtigt wird.

6. Gefahrenfalleinrichtung (10) für ein Fahrzeug (1), welches Teil eines Gespanns aus einem Zugfahrzeug und wenigstens einem Anhänger ist, zur, insbesondere automatischen, Durchführen einer Fahrzeugfunktion des Fahrzeugs (1) zur Verminderung eines Gefahrenrisikos des Fahrzeugs (1) im Falle eines auftretenden, sich potentiell verschlimmernden und/oder ausbreitenden Gefahrenfalls, insbesondere Brandfalls des Fahrzeugs (1), wobei das Fahrzeug (1) eine Sensoreinrichtung (9) zur Erfassung des, sich potentiell verschlimmernden und/oder ausbreitenden Gefahrenfalls des Fahrzeugs (1) aufweist, **dadurch gekennzeichnet, dass** die Gefahrenfalleinrichtung (10) dazu geeignet und bestimmt ist, wenigstens eine für ein Gefahrenrisiko des Fahrzeugs (1) charakteristische Gefahrengröße auf Grundlage des erfassten Gefahrenfalls zu ermitteln und wenigstens eine Fahrzeugfunktion des Fahrzeugs (1) und wenigstens eine Prognosegröße zu ermitteln, welche für das Gefahrenrisiko des Fahrzeugs (1) bei Durchführung der Fahrzeugfunktion charakteristisch ist, wobei es sich bei der ermittelten Fahrfunktion um einen, insbesondere automatischen, Abkoppelvorgang des Fahrzeugs (1) aus dem Gespann handelt und wobei die Gefahrenfalleinrichtung (10) zur Ermittlung eines für die ermittelte Fahrzeugfunktion charakteristischen Fahrzeugfunktionssignals auf Grundlage der wenigstens einen Prognosegröße und der wenigstens einen Gefahrengröße und Bereitstellung des ermittelten Fahrzeugfunktionssignals zur automatischen Durchführung der Fahrzeugfunktion und/oder zur Ausgabe an einen Insassen des Fahrzeugs (1) mittels einer Ausgabeeinrichtung des Fahrzeugs (1) geeignet und bestimmt ist.

7. Fahrzeug (1), insbesondere Kraftfahrzeug, umfassend eine Gefahrenfalleinrichtung (10) gemäß dem vorhergehenden Anspruch sowie eine Sensoreinrichtung (9) zur Erfassung des Gefahrenfalls.

8. Fahrzeug (1) nach dem vorhergehenden Anspruch, mit einer Anhängerkupplung zur Kopplung mit einem Anhänger zu einem Gespann, wobei die Anhängerkupplung derart ausgebildet ist, dass eine mechanische Trennung der Kopplung zwischen dem Anhänger und dem Fahrzeug (1) unmittelbar eine Trennung einer elektrischen Verbindung zwischen dem Anhänger und dem Fahrzeug (1) bewirkt.

9. Computerprogramm, umfassend Befehle, die bewirken, dass das Fahrzeug von Anspruch 7 oder 8 die Verfahrensschritte nach einem der Ansprüche 1 bis 5 ausführt.

10. Datenspeicher, auf welchem das Computerprogramm nach Anspruch 9 gespeichert ist.

## Claims

1. Method for, in particular automatically, carrying out a vehicle function of a vehicle (1), which is part of an outfit consisting of a towing vehicle and at least one trailer, for reducing a hazard risk of the vehicle (1) in the event of an occurring, potentially worsening and/or spreading hazard, in particular a fire in the vehicle (1), comprising:
- detecting the potentially worsening and/or spreading hazard of the vehicle (1) by means of a sensor device (9) of the vehicle (1), and determining at least one hazard variable characteristic of a hazard risk of the vehicle (1) on the basis of the detected hazard;
- determining at least one vehicle function of the vehicle (1), wherein the determined driving function is an, in particular automatic, uncoupling process of the vehicle (1) from the outfit, and determining at least one predicted variable which is characteristic of the hazard risk of the vehicle (1) when carrying out the vehicle function;
- determining a vehicle function signal characteristic of the determined vehicle function on the basis of the at least one predicted variable;
- providing the determined vehicle function signal of the at least one hazard variable for automatically carrying out the vehicle function and/or for output to an occupant of the vehicle (1) by means of an output device, in particular of the vehicle (1).

2. Method according to the preceding claim, **characterized in that** determining the vehicle function comprises determining a destination of the vehicle (1) at which the uncoupling process of a trailer coupled to the vehicle (1) is carried out.

3. Method according to either of the preceding claims, **characterized in that** determining the vehicle function comprises determining a parking location of the trailer of the outfit and preferably of the towing vehicle of the outfit.

4. Method according to any of the preceding claims, **characterized in that,** after an uncoupling process, an automatic increase in the distance between the towing vehicle and the trailer is carried out.

5. Method according to any of the preceding claims, **characterized in that,** in order to determine the vehicle function, a destination of the vehicle (1) is determined, which is suitable and intended as a parking location for the vehicle (1) to reduce a hazard risk of the vehicle (1), and/or in determining the destination of the vehicle (1), a current lane of the vehicle (1), a road type (1), a fire load of the vehicle surroundings, a maximum distance from the current location of the vehicle (1), a current speed of the vehicle (1), a predetermined maximum speed of the vehicle (1), a traffic density in the vehicle surroundings of the vehicle (1) and/or the like are taken into account.

6. Hazard device (10) for a vehicle (1), which is part of an outfit consisting of a towing vehicle and at least one trailer, for, in particular automatically, carrying out a vehicle function of the vehicle (1) for reducing a hazard risk of the vehicle (1) in the event of an occurring, potentially worsening and/or spreading hazard, in particular a fire in the vehicle (1), the vehicle (1) having a sensor device (9) for detecting the potentially worsening and/or spreading hazard of the vehicle (1), **characterized in that** the hazard device (10) is suitable and intended to determine at least one hazard variable characteristic of a hazard risk of the vehicle (1) on the basis of the detected hazard and to determine at least one vehicle function of the vehicle (1) and at least one predicted variable which is characteristic of the hazard risk of the vehicle (1) when the vehicle function is carried out, the determined driving function being an, in particular automatic, uncoupling process of the vehicle (1) from the outfit, and the hazard device being suitable and intended (10) to determine a vehicle function signal characteristic of the determined vehicle function on the basis of the at least one predicted variable and the at least one hazard variable, and to provide the determined vehicle function signal for automatically carrying out the vehicle function and/or for output to an occupant of the vehicle (1) by means of an output device of the vehicle (1).

7. Vehicle (1), in particular a motor vehicle, comprising a hazard device (10) according to the preceding claim and a sensor device (9) for detecting the hazard.

8. Vehicle (1) according to the preceding claim, having a trailer coupling for coupling to a trailer to form an outfit, wherein the trailer coupling is designed in such a way that a mechanical separation of the coupling between the trailer and the vehicle (1) immediately causes a separation of an electrical connection between the trailer and the vehicle (1).

9. Computer program comprising instructions which cause the vehicle of claim 7 or claim 8 to carry out the method steps according to any of claims 1 to 5.

10. Data storage device on which the computer program according to claim 9 is stored.

## Revendications

1. Procédé pour la réalisation, en particulier automatique, d'une fonction de véhicule d'un véhicule (1) qui fait partie d'un attelage constitué d'un véhicule tracteur et d'au moins une remorque, pour la réduction d'un risque de danger du véhicule (1) dans le cas d'un cas de danger survenant, s'aggravant et/ou se propageant potentiellement, en particulier un cas d'incendie du véhicule (1), comprenant :
- la détection du cas de danger du véhicule (1), s'aggravant et/ou se propageant potentiellement, à l'aide d'un dispositif de capteur (9) du véhicule (1) et la détermination d'au moins une grandeur de danger caractéristique d'un risque de danger du véhicule (1) sur la base du cas de danger détecté ;
- la détermination d'au moins une fonction de véhicule du véhicule (1), la fonction de conduite déterminée étant une opération de désaccouplement, en particulier automatique, du véhicule (1) de l'attelage et la détermination d'au moins une grandeur de prévision qui est caractéristique du risque de danger du véhicule (1) lors de la réalisation de la fonction de véhicule ;
- la détermination d'un signal de fonction de véhicule caractéristique de la fonction de véhicule déterminée sur la base de l'au moins une grandeur de prévision ;
- la mise à disposition du signal de fonction de véhicule déterminé de l'au moins une grandeur de danger pour la réalisation automatique de la fonction de véhicule et/ou pour la délivrance à un occupant du véhicule (1) à l'aide d'un dispositif de délivrance, en particulier du véhicule (1).

2. Procédé selon la revendication précédente, **caractérisé en ce que** la détermination de la fonction de véhicule comprend une détermination d'une destination du véhicule (1) à laquelle l'opération de désaccouplement d'une remorque attelée au véhicule (1) est effectuée.

3. Procédé selon l'une des revendications précédentes,
**caractérisé en ce que** la détermination de la fonction de véhicule comprend une détermination d'un lieu de stationnement de la remorque de l'attelage et de préférence du véhicule tracteur de l'attelage.

4. Procédé selon l'une des revendications précédentes,
**caractérisé en ce qu'**après une opération de désaccouplement, une augmentation automatique de la distance entre le véhicule tracteur et la remorque est effectué.

5. Procédé selon l'une des revendications précédentes,
**caractérisé en ce que,** pour la détermination de la fonction de véhicule, on détermine une destination du véhicule (1) qui est appropriée et déterminée comme lieu de stationnement pour le véhicule (1) pour la réduction d'un risque de danger du véhicule (1) et/ou, lors de la détermination de la destination du véhicule (1), une voie de circulation momentanée du véhicule (1), un type de voie de circulation (1), une charge d'incendie de l'environnement du véhicule, une distance maximale par rapport au lieu de séjour momentané du véhicule (1), une vitesse momentanée du véhicule (1), une vitesse maximale prédéterminée du véhicule (1), une densité de trafic dans l'environnement de véhicule du véhicule (1) et/ou similaire sont pris en compte.

6. Dispositif de détection de danger (10) pour un véhicule (1) qui fait partie d'un attelage constitué d'un véhicule tracteur et d'au moins une remorque, pour la réalisation, en particulier automatique, d'une fonction de véhicule du véhicule (1) pour la réduction d'un risque de danger du véhicule (1) en cas d'un cas de danger survenant, s'aggravant et/ou se propageant potentiellement, en particulier un cas d'incendie du véhicule (1), le véhicule (1) comportant un dispositif de capteur (9) pour la détection du cas de danger du véhicule (1) s'aggravant et/ou se propageant potentiellement, **caractérisé en ce que** le dispositif de détection de danger (10) est approprié et destiné à déterminer au moins une grandeur de danger caractéristique d'un risque de danger du véhicule (1) sur la base du cas de danger détecté et à déterminer au moins une fonction de véhicule du véhicule (1) et au moins une grandeur de pronostic, qui est caractéristique du risque de danger du véhicule (1) lors de la réalisation de la fonction de véhicule, la fonction de conduite déterminée étant une opération, en particulier automatique, de désaccouplement du véhicule (1) de l'attelage et le dispositif de détection de danger (10) étant approprié et destiné pour la détermination d'un signal de fonction de véhicule caractéristique de la fonction de véhicule déterminée sur la base de l'au moins une grandeur de pronostic et de l'au moins une grandeur de danger et pour la mise à disposition du signal de fonction de véhicule déterminé pour la réalisation automatique de la fonction de véhicule et/ou pour la délivrance à un occupant du véhicule (1) à l'aide d'un dispositif de délivrance du véhicule (1).

7. Véhicule (1), en particulier véhicule automobile, comprenant un dispositif de détection de danger (10) selon la revendication précédente ainsi qu'un dispositif de capteur (9) pour la détection du cas de danger.

8. Véhicule (1) selon la revendication précédente, comportant un attelage de remorque pour l'accouplement à une remorque pour la formation d'un attelage, l'attelage de remorque étant conçu de telle sorte qu'une séparation mécanique de l'accouplement entre la remorque et le véhicule (1) provoque immédiatement une séparation d'une connexion électrique entre la remorque et le véhicule (1).

9. Programme informatique comprenant des instructions qui ont pour effet que le véhicule selon la revendication 7 ou 8 exécute les étapes de procédé selon l'une des revendications 1 à 5.

10. Mémoire de données, sur laquelle est stocké le programme informatique selon la revendication 9.
